# FASCICULE DE BREVET EUROPEEN

(11) **EP 1 451 122 B1**
(45) Date de publication et mention de la délivrance du brevet: **11.05.2011**
(21) Numéro de dépôt: 02799782.4
(22) Date de dépôt: 05.12.2002
(51) Int. Cl.: C03C 25/26

(54) **COMPOSITION D'ENSIMAGE POUR FILS DE VERRE; FILS DE VERRE AINSI OBTENUS ET COMPOSITES COMPRENANT LESDITS FILS**
SCHLICHTEZUSAMMENSETZUNG FÜR GLASFÄDEN, DAMIT ERHALTENE GLASFÄDEN UND DIESE FÄDEN ENTHALTENDE VERBUNDWERKSTOFFE
SIZING COMPOSITION FOR GLASS YARNS, THE GLASS YARNS THUS OBTAINED AND COMPOSITE MATERIALS COMPRISING SAID YARNS

(30) Priorité: 05.12.2001 FR 0115686
(43) Date de publication de la demande: 01.09.2004
(73) Titulaire: Saint-Gobain Technical Fabrics Europe, 73000 Chambéry (FR)
(72) Inventeur: MOIREAU, Patrick, F-73193 Curienne (FR)
(74) Mandataire: Muller, René
(86) Numéro de dépôt international: PCT/FR2002/004196
(87) Numéro de publication internationale: WO 2003/048066

(56) Documents cités:
- FR-A- 2 772 369
- US-A- 4 351 752
- US-A- 5 882 792

## Description

La présente invention concerne une composition d'ensimage pour fils de verre, les fils de verre obtenus ainsi que les composites incorporant lesdits fils de verre.

La fabrication de fils de verre de renforcement se fait de manière connue à partir de filets de verre fondu s'écoulant des orifices de filières. Ces filets sont étirés sous forme de filaments continus, puis ces filaments sont rassemblés en fils de base qui sont ensuite collectés sous diverses formes : bobines de fils continus, mats de fils continus ou coupés, fils coupés, ....

Avant leur rassemblement sous la forme de fils, les filaments sont revêtus d'un ensimage par passage sur un organe ensimeur. L'application d'un ensimage est nécessaire à l'obtention des fils, d'une part, et à la réalisation de composites associant lesdits fils en tant qu'agent de renforcement et d'autres matières organiques et/ou inorganiques, d'autre part.

L'ensimage sert en premier lieu de lubrifiant et protège les fils de l'abrasion résultant du frottement à grande vitesse des fils sur les différents organes rencontrés dans le procédé précédemment cité. Il est important que le fil de verre possède une aptitude au glissement ("un glissant") suffisante pour résister aux opérations de transformation postérieures, telles que le dévidage et l'enroulement sur des supports appropriés ou le tissage, de manière à éviter au maximum les frottements susceptibles de briser les filaments.

L'ensimage a également pour fonction de conférer une intégrité aux fils précités, c'est-à-dire de lier les filaments entre eux au sein des fils. Cette intégrité est plus particulièrement recherchée dans les applications textiles où les fils sont soumis à de fortes contraintes mécaniques, notamment en traction. Ainsi, lorsque les filaments sont peu solidaires les uns des autres, ils ont tendance à se rompre plus facilement quand ils sont sollicités, entraînant la formation de bourre qui perturbe le fonctionnement des machines textiles, voire même nécessite leur arrêt complet. De plus, les fils non intègres sont considérés comme délicats à manipuler, notamment lorsqu'il s'agit de former des bobines car alors des filaments brisés apparaissent sur les flancs. Outre l'aspect esthétique peu satisfaisant, il est plus difficile de dérouler les fils extraits de ces bobines.

L'ensimage a également pour rôle de favoriser le mouillage et/ou l'imprégnation des fils par les matières à renforcer en créant des liaisons entre les fils et ces matières. De la qualité de l'adhérence de la matière aux fils et de l'aptitude au mouillage et/ou à l'imprégnation des fils par la matière dépendent les propriétés mécaniques des composites résultants. Dans la plupart des cas, l'ensimage permet d'obtenir des composites présentant des propriétés mécaniques améliorées.

Les compositions d'ensimage doivent aussi être compatibles avec les conditions de production des fils qui imposent notamment des vitesses d'étirage des filaments élevées atteignant plusieurs dizaines de mètres par seconde. Elles doivent aussi résister aux forces de cisaillement induit par le passage des filaments, notamment au regard de la viscosité qui ne doit pas fluctuer de manière sensible, et être aptes à mouiller correctement la surface des filaments afin d'obtenir un gainage uniforme sur toute leur longueur. Lorsqu'elles sont destinées à polymériser, les compositions d'ensimage doivent en outre demeurer stables aux températures sous filière (de l'ordre de 60 à 100°C). Notamment, il est souhaitable de faire en sorte que les constituants polymérisables possèdent une faible tension de vapeur aux températures indiquées afin d'éviter les problèmes de variation de concentration résultant de la volatilisation de certains constituants. Il est également important de contrôler le taux de conversion défini par le rapport du nombre de fonctions ayant réagi dans l'ensimage au nombre de fonctions réactives de départ pour garantir l'obtention de fils de verre ensimés de qualité constante. Le taux de conversion doit notamment être très proche du taux théorique attendu pour éviter que l'ensimage n'évolue dans le temps.

En règle générale, les compositions d'ensimage sont choisies de façon à remplir les fonctions précédemment citées et à ne pas subir de réactions chimiques provoquant une augmentation importante de la viscosité aussi bien pendant le stockage à la température ambiante que dans les conditions de températures sous filière plus élevées.

Les ensimages les plus couramment employés sont des ensimages aqueux à faible viscosité, faciles à mettre en oeuvre mais qui doivent être déposés en grande quantité sur les filaments. L'eau représente généralement plus de 80 % en poids de l'ensimage ce qui oblige à sécher les fils avant leur utilisation car l'eau peut, entre autres, entraîner une diminution de l'adhérence entre les fils et la matière à renforcer. Le séchage par traitement thermique est une opération longue et coûteuse qui nécessite une adaptation parfaite aux conditions de fabrication des fils. Un tel traitement n'est pas neutre au regard du fil ensimé. Lorsque le fil ensimé est sous la forme d'enroulements notamment, il peut se produire une modification de la répartition des constituants de l'ensimage par migration irrégulière et/ou sélective, une coloration du fil et une déformation dé l'enroulement. La déformation s'observe aussi, en l'absence de séchage, sur des enroulements à bords droits (ou stratifils) de fils fins (masse linéique ou titre inférieur à 600 tex (g/km)) revêtus d'un ensimage aqueux.

Afin de résoudre les problèmes précités, il a été proposé des compositions d'ensimage dites anhydres, c'est-à-dire qui comprennent moins de 5% en poids de solvant. De telles compositions sont décrites par exemple dans les demandes de brevets suivants :
Dans FR-A-2 727 972, on propose une composition pour l'ensimage de fils de verre qui polymérise sous l'action d'un rayonnement UV ou d'un faisceau d'électrons. Cette composition comprend un système de base polymérisable qui contient au moins un composant de masse moléculaire inférieure à 750 présentant au moins une fonction époxy et comprenant au moins 60% en poids d'un ou plusieurs composant(s) de masse moléculaire inférieure à 750 présentant au moins une fonction époxy, hydroxy, vinyléther, acrylique ou méthacrylique.

Dans FR-A-2 772 369, on décrit une composition d'ensimage pour fils de verre, qui ne nécessite pas d'étape de traitement thermique postérieurement au dépôt sur le fil. Cette composition comprend au moins 60 % en poids de composants susceptibles de polymériser, ces composants étant pour au moins 60 % d'entre eux des composants de masse moléculaire inférieure à 750 et ces composants polymérisables comprenant au moins un mélange de composant(s) ayant au moins une fonction réactive acrylique et/ou méthacrylique et de composant(s) ayant au moins une fonction amine primaire et/ou amine secondaire, au moins 20 % en poids de ces composants présentant au moins deux fonctions réactives acrylique, méthacrylique, amine primaire et/ou amine secondaire.

Les compositions anhydres qui viennent d'être citées contiennent une forte proportion de monomères susceptibles de polymériser à la température ambiante. Etant donné qu'il s'écoule très peu de temps, en général moins d'une seconde entre le dépôt de la composition sur les filaments de verre et le bobinage du fil, les spires de l'enroulement sont généralement revêtues d'un ensimage incomplètement polymérisé. Dans les conditions de bobinage direct du fil pour former un enroulement à bords droits (stratifils), la cinétique de polymérisation est souvent insuffisante pour permettre un blocage efficace des premières couches de fil. Sous l'effet de l'accumulation des couches suivantes, les couches inférieures ont tendance à s'affaisser, entraînant ainsi une modification des caractéristiques dimensionnelles de l'enroulement en cours de bobinage. Les défauts observés (déformation, accroissement de la longueur, ...) rendent de tels enroulements inutilisables sur les dispositifs auxquels ils sont destinés.

Dans les conditions qui viennent d'être exposées, la composition d'ensimage doit pouvoir être déposée sur les filaments à l'état liquide et évoluer rapidement vers un état gélifié pendant le bobinage du fil. Le temps nécessaire pour atteindre l'état gélifié (« temps de gel ») dépend de la température au moment du dépôt, cette température étant généralement de l'ordre de 60 à 100°C dans les conditions habituelles de production des filaments. Le temps de gel dépend aussi du type d'enroulement que l'on souhaite obtenir et il peut varier de manière très sensible selon le mode de construction (rectitude des bords, angle de croisure, ...). Ainsi, une composition d'ensimage destinée à former des enroulements à bords droits est considérée comme satisfaisante lorsque son temps de gel mesuré à la température ambiante (de l'ordre de 25°C) est comprise entre 10 et 40 minutes, de préférence 15 et 30 minutes. Lorsqu'il s'agit de former des enroulements du type "gâteaux", on recherche préférentiellement une composition d'ensimage présentant un temps de gel plus important, de l'ordre de 100 minutes. En outre, le temps de gel a aussi une influence sur les propriétés finales du fil, en particulier au niveau de son intégrité qui est généralement d'autant plus faible que la réaction de polymérisation est rapide.

Le dépôt des compositions d'ensimage basées sur la polymérisation de composé(s) époxy et de composé(s) amine(s) peut être réalisé de deux manières : soit en une seule étape en utilisant une composition renfermant l'ensemble des composés réactifs époxy et aminés, soit en deux étapes en revêtant les filaments d'une première composition comprenant un type de composés réactifs (époxy ou amines) et d'une deuxième composition renfermant l'autre type de composés réactifs (amines ou époxy). Quelle que soit la manière choisie, il s'avère que le temps de gel est relativement long, de l'ordre de deux heures ou plus.

Il est possible de réduire le temps de gel en utilisant des composés ayant une réactivité élevée, en particulier des amines primaires, et/ou en augmentant la quantité de ces composés dans la composition. Toutefois, ces amines sont connues pour avoir un degré de toxicité élevé et une tension de vapeur souvent importante à la température du dépôt (de l'ordre de 60 à 100°C comme indiqué précédemment). C'est pourquoi on préfère limiter leur emploi pour prévenir tout risque de nuire à la santé des personnes qui travaillent dans un tel environnement.

La présente invention a pour but de contrôler le temps de gel de compositions d'ensimage polymérisables destinées à revêtir des fils de verre qui procèdent par réaction de composé(s) renfermant une ou plusieurs fonctions époxy, de composé(s) renfermant une ou plusieurs fonctions amines et de composés renfermant une ou plusieurs fonctions hydroxy permettant ainsi d'adapter ce temps en fonction des applications visées.

Un autre but de la présente invention est de proposer une composition d'ensimage dans laquelle la teneur en amines primaires est maintenue aussi basse que possible, tout en conservant un temps de gel compatible avec les conditions de production du fil de verre.

La présente invention a également pour objet les fils de verre revêtus de la composition d'ensimage précitée, ces fils présentant une raideur et une intégrité élevées et étant aptes à renforcer efficacement des matières organiques et/ou inorganiques en vue de former des composites.

La composition d'ensimage selon l'invention est constituée d'une solution comprenant moins de 5 % en poids de solvant et comprenant un système de base polymérisable thermiquement, ledit système comprenant au moins 60 % en poids de composants de masse moléculaire inférieure à 750 et au moins 60 % en poids de composants d'un mélange :
- de composant(s) présentant au moins une fonction réactive époxy
- de composant(s) présentant au moins une fonction réactive amine, de préférence primaire ou secondaire,
- et de composant(s) présentant au moins une fonction réactive hydroxy, la teneur en composant(s) hydroxy représentant de 10 à 30% en poids de la composition.

Dans la présente invention, les expressions ci-après ont la signification suivante :
Par « solvant », on entend l'eau et les solvants organiques susceptibles d'être mis en oeuvre pour solubiliser certains composants polymérisables. La présence de solvant(s) en quantité limitée ne nécessite pas de traitement particulier pour les éliminer. Dans la majeure partie des cas, les ensimages selon l'invention sont totalement dénués de solvant.

Par « polymériser », « polymérisable », « polymérisation », .... on entend respectivement « polymériser et/ou réticuler », « polymérisable et/ou réticulable », « polymérisation et/ou réticulation », ....

Par « fonction réactive », on entend une fonction susceptible d'intervenir dans la réaction de polymérisation de l'ensimage, la polymérisation pouvant être effectuée à la température habituelle de production des fils, c'est-à-dire sans apport thermique supplémentaire, ce qui est préféré, ou à une température plus élevée (polymérisation thermique).

Par « système de base polymérisable », on entend l'ensemble des composants indispensables qui permettent d'obtenir la structure polymérisée attendue de l'ensimage.

Par la suite, par « composant(s) époxy », par « composant(s) amine » et par « composant(s) hydroxy », on entend, respectivement « composant(s) présentant au moins une fonction réactive époxy », « composant(s) présentant au moins une fonction réactive amine » et « composant(s) présentant au moins une fonction réactive hydroxy ».

La composition d'ensimage selon l'invention est compatible avec les conditions d'obtention des fils de verre imposées par le procédé direct, la viscosité de la composition étant adaptée en fonction de la vitesse d'étirage et du diamètre des filaments amenés à la traverser. La composition selon l'invention présente également une vitesse de mouillage sur le fil compatible avec la vitesse d'étirage des fils.

En règle générale, le système de base polymérisable représente entre 60 et 100 % en poids de la composition d'ensimage selon l'invention principalement entre 75 et 100 % en poids de la composition et, dans la plupart des cas, entre 80 et 100 % en poids de la composition.

Le système de base est en majorité constitué (de préférence à 80 % en poids et jusqu'à 100 % en poids dans la majorité des cas) de(s) composant(s) époxy, de(s) composant(s) amine et de(s) composant(s) hydroxy, l'utilisation de ce mélange de composants permettant l'obtention, après polymérisation, de polymères résultant de la réaction des différentes fonctions amines époxy et hydroxy des constituants de départ. En particulier, ce sont les terpolymères époxy-amine-hydroxy qui participent majoritairement à la structure de l'ensimage polymérisé, et de cette structure découlent directement les propriétés des fils de verre ensimés.

En outre, le système de base comprend une majorité (de préférence au moins 70 % en poids et jusqu'à 100 % en poids) de composant(s) de masse moléculaire inférieure à 750, ce(s) composant(s) faisant normalement partie, pour la plupart des composants époxy, amine et hydroxy précités.

De préférence et en général selon l'invention, les composants de masse moléculaire inférieure à 750 précédemment mentionnés sont de masse moléculaire inférieure à 500.

Lorsque le système de base renferme des composants de masse moléculaire supérieure à 750, il comprend avantageusement un ou plusieurs composants époxy de masse moléculaire supérieure à 1000 (prépolymères). La teneur en ces composants est généralement inférieure à 20 % en poids de la composition d'ensimage car au-delà la viscosité de même que la réactivité de la composition deviennent trop importantes pour permettre le dépôt de l'ensimage sur les fils de verre dans les conditions du procédé susmentionné.

Selon certains modes de réalisation, le système de base selon l'invention peut éventuellement comprendre une faible proportion (moins de 25 %) de composant(s) participant à la structure de l'ensimage polymérisé mais ne présentant pas de fonctions époxy, amine ou hydroxy et/ou présentant une masse moléculaire plus élevée. De préférence, la proportion de ces composants est inférieure à 15 % et mieux encore est au moins égale à 5 %.

Selon le mode de réalisation préféré de l'invention permettant d'obtenir des résultats particulièrement satisfaisants, le système de base est constitué de composant(s) époxy, de composant(s) amine renfermant deux fonctions réactives amines et de composant(s) renfermant au moins une fonction réactive hydroxy. De manière particulièrement avantageuse, les fonctions amine sont primaires et/ou secondaires, et mieux encore primaires.

Chacun des composants époxy, amine ou hydroxy pouvant être utilisé dans le système de base peut présenter une ou plusieurs fonctions réactives époxy, amine ou hydroxy.

Le ou les composants époxy du système de base peuvent être notamment être choisis parmi :
- composants renfermant une fonction époxy : les glycidyléthers tels que les alkyglycidyléthers en C₄-C₁₆, par exemple le 2-éthylhexylglycidyléther, le laurylglycidyléther et l'acryloxyhexylglycidyléther, les glycidyléthers aromatiques tels que le phénylglycidyléther, le p-ter-butylphénylglycidyléther, le nonylphénylglycidyléther, le crésylglycidyléther, les glycidylesters de l'acide versatique tels que le monoester glycidique d'acide pivalique ou le monoester glycidique d'acide néodécanoïque,
- les composants renfermant deux fonctions époxy : le limonène dioxyde, les polyglycols diépoxydes, les diglycidyléthers tels que le 1,4-butanedioldiglycidyléther, le néopentylglycoldiglycidyléther, le bromonéopentylglycoldiglycidyléther, le 1,6-hexanedioldiglycidyléther, le cyclohexanediméthylodiglycidyléther, le résorcinoldiglycidyléther, le bisphénol A diglycidyléther, le bisphénol F diglycidyléther, les diglycidylesters, le diglycidylester d'anhydride hexadihydrophtalique, la diglycidylhydantoïne, le triglycidylisocyanurate, les résines époxyphénol novolaques et les résines époxycrésol novolaques,
- les composants renfermant trois fonctions époxy : le triméthyloléthane triglycidyléther, le triméthylolpropane triglycidyléther, les triglycidylethers d'huile de palme, le triphénylolméthane triglycidyléther, les triglycidyléthers de p-aminophénol, les résines époxyphénol novolaques et les résines époxycrésol novolaques,
- les composants renfermant au moins quatre fonctions époxy : les polyépoxy polybutadiènes, les polyglycidyléthers de polyols aliphatiques, les résines époxyphénol novolaques, les résines époxycrésol novolaques, le tétra(paraglycidoxyphényl)éthane, le 4,4'-(diglycidylamino)diphénylméthane, le N,N,N',N'-tétraglycidyl-A,A'-bis(4-aminophényl)-p-diisopropylbenzène et le N,N,N',N'-tétraglycidyl-A,A'-bis(4-amino-3,5-diméhtylphényl)-p-diisopropylbenzène.

Parmi les composants époxy qui viennent d'être cités, on préfère ceux qui renferment une à trois fonctions réactives époxy.

En règle générale selon l'invention, la proportion de composant(s) époxy du système de base est comprise entre 15 et 85 % en poids de la composition d'ensimage, principalement entre 25 et 75 % en poids environ de la composition d'ensimage. Dans la plupart des cas, elle est comprise entre 35 et 65 % en poids de la composition d'ensimage.

Le ou les composants amine du système de base peuvent être choisis parmi les composants renfermant une ou plusieurs fonctions amine primaire et/ou secondaire tels que :
- les composants à chaîne hydrocarbonée linéaire, ramifiée ou cyclique, comprenant éventuellement un ou plusieurs hétéroatomes et/ou une ou plusieurs insaturations, par exemple l'éthylène diamine, l'héxaméthylènediamine ou les poly(éthylène)polyamines, éventuellement alkoxylés, la dipentylamine, la diisopentylamine, la dihexylamine, la 2-butyl-2-éthyl-1,5-pentanediamine, la N,N-bis(3-aminopropyl)-méthylamine, l'α-(2-aminométhyléthyl)-ω-(2-aminométhyl-éthoxy)poly-(oxy(méthyl-1,2éthandiyl), la N'-(3-aminopropyl)-N,N'-diméthyl-1,3-propanediamine, la C,C,C-triméthyl-1,6-hexanediamine, les N-éthylméthallylamines, la 2-pipéridinone, la cyanoguanidine, les polyamidoamines et leurs dérivés, l'isophoronediamine, la menthanediamine, la N-aminoéthylpipérazine, le pyrrole, la 1-(2-hydroxyéthyl)-2-imidazolidinone, le pyrazole, la 2-méthyl-pipérazine, l'aminoéthylpipérazine, la 2,6-diméthylmorpholine, la N-aminoéthylmorpholine, le 2-propyl-imidazole, le 2-isopropylimidazole, et la 2,6-diaminopyridine,
- et les composants aromatiques tels que la benzylamine, la m- ou p-phénylènediamine, la m-xylylènediamine, la diéthyltoluènediamine, le 4,4'-diaminodiphénylméthane, le 3,3'-diamino-diphénylméthane, la 4,4'-méthylène bis(2-chloroaniline), la 4,4'-diaminodiphénylsulfone, la benzoguanamine et le diamino-1-phényl-1,3,3-triméthylindane.

II est également possible d'utiliser comme composant(s) amine du système de base un ou des composants renfermant une ou plusieurs fonctions amine tertiaire tels que la 2-phényl-2-imidazoline, le 2-éthylimidazole, la 1,1-diméthoxy N,N-diméthylméthanamine, le N,N,N',N'-tétraméthyl-4,4'-diaminodicyclohexylméthane, la N,N,N',N",N"-pentaméthyldiéthylènetriamine, la N,N-bis-(2-hydroxyéthyl)aniline, la tétrabutylurée, l'acide 4-(diéthylamino)benzoïque et la 1-méthylpyrrolidine.

De préférence, on choisit les composants amines parmi les composants renfermant une ou plusieurs fonctions amine primaire et/ou secondaire.

En règle générale selon l'invention, la proportion de composant(s) amine du système de base est supérieure ou égale à 5 % en poids de la composition afin de favoriser la réaction de copolymérisation avec le(s) composant(s) époxy. Généralement, elle est comprise entre 5 et 40 % en poids de la composition d'ensimage et dans la plupart des cas, elle est comprise entre 10 et 30 % en poids de la composition d'ensimage.

Le ou les composants hydroxy du système de base peuvent être choisis parmi :
- les alcools aliphatiques ou cycloaliphatiques en C₃-C₂₀, tels que les monoalcools gras, de préférence en C₈-C₂₀, renfermant éventuellement un ou plusieurs motifs oxyalkylène, préférence oxyéthylène, les diols, par exemple le butanediol, le pentanediol, l'hexanediol et le cyclohexanediol, les triols, par exemple le glycérol et le triméthylolpropane, et les tétrols, par exemple le pentaérythritol,
- les alcools renfermant au moins un cycle aromatique, par exemple le 4-tertiobutylphénol, le résorcinol, le bisphénol A, le bisphénol F et les bisphénolpolyéthers,
- les poly(oxyalkylène)polyols, par exemple les poly(oxyéthylène)polyols, les poly(oxypropylène)polyols et les poly(oxyéthylène)(oxypropylène)-polyols, de préférence renfermant deux ou trois fonctions hydroxy,
- les aminoalcools à chaîne hydrocarbonée, linéaire ou ramifiée, pouvant contenir un ou plusieurs hétéroatomes, par exemple le 2-(2-aminoéthyl)aminoéthanol, le2-(2-(3-aminopropoxy)-éthoxy)-éthanol, le 2-diisopropylaminoéthanol, le 3-aminopropanol, la N-butyl-diéthanolamine, le 2-amino-2-éthyl1,3-propanediol, le diisopropylamino-1,2-propanediol, le 3-diéthylamino-1,2-propanediol, le tri(hydroxyméthyl)aminométhane, la triéthanolamine et la triisopropanolamine, et les aminoalcools aromatiques, par exemple le 4-aminophénol, le diméthylaminophénol ou le tris(N,N,N-diméthylaminoéthyl)phénol.

De préférence selon l'invention, les composants hydroxy sont choisis parmi les alcools renfermant au moins deux fonctions hydroxy, et mieux encore deux ou trois, et les aminoalcools renfermant une ou plusieurs fonctions amine primaire et/ou secondaire.

La proportion de composant(s) hydroxy du système de base est comprise entre 10 et 30% en poids de la composition.

De manière générale, le nombre de sites réactifs des composants époxy est supérieur au nombre de sites réactifs des composants amine. De même, le nombre de sites réactifs des composants époxy est supérieur au nombre de sites des composants hydroxy. De préférence selon l'invention, principalement dans le cas où les composants amine du système de base sont des composants amine primaire ou secondaire, le rapport r entre le nombre de sites réactifs époxy et la somme du nombre de sites réactifs amine et du nombre de sites hydroxy est compris entre 0,2 et 2,5 (une fonction époxy comptant pour un site réactif époxy, une fonction amine primaire comptant pour deux sites réactifs amine, une fonction amine secondaire comptant pour un site réactif amine et une fonction hydroxy comptant pour un site réactif hydroxy).

Dans la plupart des cas selon l'invention, ce rapport r est compris entre 0,3 et 1,7 de préférence entre 0,4 et 1,3.

De manière générale encore, le rapport r' entre le nombre de sites réactifs amine et le nombre de sites réactifs hydroxy est compris entre 0,5 et 20, de préférence entre 0,8 et 15.

La composition d'ensimage peut comprendre, en plus du système de base, au moins un catalyseur favorisant la polymérisation de l'ensimage en facilitant l'ouverture des fonctions époxy. Ce catalyseur est préférentiellement choisi parmi les bases faibles, par exemple les amines tertiaires pouvant également jouer un rôle de catalyseur tels que les trialkyl amines, les époxy amines (N-2,3 diépoxy propyl aniline), les N,N dialkylalkanol amines, les sels aminés tertiaires de polyacides, etc.

Le taux de composants jouant uniquement le rôle de catalyseurs du système de base (c'est-à-dire ne participant pas à la structure de l'ensimage polymérisé) est généralement inférieur à 8 % en poids de la composition d'ensimage, dans la plupart des cas inférieur à 4 % en poids. La présence d'un catalyseur permet d'utiliser des composants amine primaire et/ou secondaire moins réactifs. Dans le cas de composants amine très réactifs tels que la N-aminoéthylpipérazine, la menthanediamine ou les dérivés imidazole, la présence d'un catalyseur n'est pas nécessaire.

En plus des composants précités qui participent essentiellement à la structure de l'ensimage polymérisé, et le cas échéant des catalyseurs, la composition d'ensimage peut comprendre un ou plusieurs composants (ci-après désignés additifs). Ces additifs confèrent à l'ensimage des propriétés particulières et, lorsque la composition est déposée en deux étapes, comme cela est préféré, ils peuvent être apportés par l'une et/ou l'autre des compositions constituant l'ensimage.

La composition selon l'invention peut comprendre, à titre d'additif, au moins un agent de couplage permettant d'accrocher l'ensimage sur le verre. L'agent de couplage peut être un composant du système de base, auquel cas il participe à la réaction de polymérisation, ou un composant intervenant seulement en tant qu'additif.

La proportion d'agent(s) de couplage est généralement comprise entre 0 et 30 % en poids de la composition d'ensimage et dans la plupart des cas supérieure à 5 % en poids. De préférence, elle est comprise entre 10 et 25 % de la composition.

L'agent de couplage est généralement choisi parmi les silanes tels que le gamma-glycidoxypropyltriméthoxysilane, le gamma-acryloxypropyltriméthoxysilane, le gamma-méthacryloxypropyltriméthoxysilane, le poly(oxyéthylène/ oxypropylène)triméthoxysilane, le gamma-aminopropyltriéthoxysilane, le vinyltriméthoxysilane, le phénylaminopropyltriméthoxysilane, le styrylaminoéthylaminopropyltriméthoxysilane ou le terbutylcarbamoylpropyltriméthoxysilane, les siloxanes, les titanates, les zirconates et les mélanges de ces composés. On choisit de préférence les silanes.

La composition peut comprendre, à titre d'additif, au moins un agent de mise en oeuvre textile jouant essentiellement un rôle de lubrifiant, et il est dans de nombreux cas nécessaire pour que la composition présente les fonctions d'un ensimage.

La proportion d'agent de mise en oeuvre textile est généralement comprise entre 0 et 30 % en poids de la composition, et de préférence est au moins égale à 4 %.

L'agent de mise en oeuvre textile est généralement choisi parmi les esters gras tels que le laurate de décyle, le palmitate d'isopropyle, le palmitate de cétyle, le stéarate d'isopropyle, le stéarate d'isobutyle, l'adipate d'éthylèneglycol ou le trioctanoate de triméthylolpropane, les dérivés d'alkylphénols tels que le nonylphénol éthoxylé, les dérivés de polyalkylèneglycols tel que l'isostéarate de polyéthylèneglycol comportant avantageusement moins de 10 motifs oxyéthylène, les mélanges à base d'huiles minérales, et les mélanges de ces composés.

La composition selon l'invention peut aussi comprendre, à titre d'additif, au moins un agent filmogène qui joue uniquement le rôle d'agent de glissement facilitant le fibrage, notamment en empêchant un frottement important des filaments sur le dispositif ensimeur lorsque ces derniers sont étirés à grande vitesse et/ou lorsqu'ils sont très fins. Cet agent est cependant coûteux et peut en outre entraîner une diminution des caractéristiques mécaniques des fils.

La proportion d'agent filmogène est généralement inférieure ou égale à 8 % en poids de la composition, et de préférence inférieure ou égale à 5 %.

L'agent filmogène est généralement choisi parmi les silicones et les dérivés de silicones tels que les huiles de silicones, les siloxanes et les polysiloxanes tels que le glycidyl(n)polydiméthylsiloxane ou l'alpha,oméga-acryloxypolydiméthylsiloxane, les silicones polyacrylates, et les mélanges de ces composés.

La composition selon l'invention peut comprendre, à titre d'additif, au moins un agent d'adaptation aux matières à renforcer, par exemple un inhibiteur de la corrosion tel que l'acide gallique ou ses dérivés dans le cas des matières cimentaires.

La composition selon l'invention peut être déposée sur les filaments de verre en une ou plusieurs étapes, par exemple dans les conditions du procédé décrit dans FR-A-2 763 328. Dans ce procédé, on étire des filets de verre fondu s'écoulant d'orifices disposés à la base d'une ou plusieurs filières sous la forme d'une ou plusieurs nappes de filaments continus puis on rassemble les filaments en un ou plusieurs fils que l'on collecte sur un ou plusieurs supports en mouvement. On effectue le dépôt de l'ensimage en appliquant sur les filaments une première composition stable de viscosité comprise entre 0,5 et 300 cP, et au moins une deuxième composition stable de viscosité comprise entre 0,5 et 250 cP, amenée séparément de la première composition.

La deuxième composition peut être déposée sur les filaments au plus tôt lors du dépôt de la première composition ou sur les fils au plus tard lors de leur collecte sur les supports. L'écart de viscosité entre les compositions est généralement inférieur à 150 cP.

La composition selon l'invention est préférentiellement appliquée en deux étapes, la première composition comprenant de préférence le(s) composant(s) époxy, et éventuellement un ou plusieurs additifs, et la deuxième composition comprenant le(s) composant(s) amine et les composant(s) hydroxy, et éventuellement un ou plusieurs additifs, notamment le ou les catalyseurs de polymérisation.

Le dépôt de l'ensimage en deux étapes est particulièrement avantageux. Il permet une meilleure maîtrise des réactions de polymérisation et de ce fait l'ensimage a une qualité uniforme sur toute la longueur des fils tout en assurant une productivité élevée avec un risque réduit de casse des fils.

En règle générale, la polymérisation de l'ensimage déposé sur le fil ne nécessite pas d'apport supplémentaire de chaleur. Il est cependant possible de soumettre le fil après fibrage à un traitement thermique à différents stades du procédé en vue d'accélérer la polymérisation. Ce traitement peut s'appliquer à des fils collectés sous forme d'enroulement, sur des nappes de fils continus ou coupés, ou encore sur des fils en association avec une matière organique pour réaliser des composites. A titre d'illustration, pour un stratifil pesant environ 20 kg, un traitement à une température de l'ordre de 120 à 140 °C pendant environ 8 heures s'avère satisfaisant. Pour des fils coupés, la durée de traitement n'excède pas la dizaine de minutes à température équivalente.

L'intégrité proprement dite des fils par collage des filaments qui le constituent obtenue après polymérisation de l'ensimage est particulièrement importante alors que le taux d'ensimage sur les fils est relativement faible. La perte au feu des fils revêtus de la composition d'ensimage conforme à l'invention n'excède en effet pas 3 % en poids, de préférence 1,5 % en poids.

Le taux de conversion des composants amines de la composition d'ensimage selon l'invention est proche de 100 %. Connaissant les problèmes liés à la toxicité des composés amines, disposer de compositions dont la teneur résiduelle en ces composés est proche de zéro est un avantage supplémentaire.

Les fils ensimés sont généralement collectés sous la forme d'enroulements sur des supports en rotation, tels que des gâteaux, des stratifils et des « cops ». Quels que soient l'état de polymérisation de l'ensimage et l'angle de croisure, même lorsque ce dernier est faible (inférieur à 1,5°), il est facile de dévider les fils provenant des enroulements et de les manipuler. Les enroulements à bords droits conservent leurs caractéristiques dimensionnelles dans le temps et ne subissent aucune déformation. Les fils peuvent également être utilisés ultérieurement pour la réalisation de grilles, de tissus, de tresses, de rubans, ....

Les fils peuvent aussi être collectés sur des supports récepteurs en translation. Ils peuvent être notamment projetés par un organe servant aussi à les étirer vers la surface de collecte se déplaçant transversalement à la direction des fils projetés en vue d'obtenir une nappe de fils continus entremêlés ou « mat ». Les fils peuvent aussi être coupés avant la collecte par un organe servant également à les étirer.

Les filaments de verre constituant ces fils ont un diamètre qui peut varier dans une large mesure, le plus souvent de 5 à 30 µm. Ils peuvent être constitués de n'importe quel verre, les plus connus dans le domaine des fils de renforcement étant le verre E et le verre AR.

Les fils obtenus selon l'invention peuvent être utilisés avantageusement pour renforcer diverses matières en vue d'obtenir des pièces composites ayant des propriétés mécaniques élevées. Les composites sont obtenus en associant au moins des fils de verre selon l'invention et au moins une matière organique et/ou inorganique, le taux de verre dans le composite final variant généralement de 1 à 5 % en poids (matrice cimentaire) et de 20 à 80 % en poids, et de préférence 30 à 70 % (matrice organique).

Les exemples qui suivent permettent d'illustrer l'invention sans toutefois la limiter.

Dans ces exemples, on utilise les méthodes d'analyse suivantes pour la mesure des propriétés physiques des compositions d'ensimage et des fils de verre revêtus de la composition d'ensimage selon l'invention :
- le temps de gel, exprimé en minutes, est mesuré au moyen d'un dispositif TROMBOMAT (commercialisé par la société PRODEMAT S.A.) qui trace la courbe de viscosité de la composition d'ensimage en fonction du temps. Sur cette courbe, le point d'intersection entre la tangente au point d'inflexion et l'axe des abscisses correspond au temps de gel.
- la perte au feu est mesurée selon la norme ISO 1887. Elle est exprimée en %.
- la raideur ou rigidité est mesurée dans les conditions définies par la norme ISO 3375 sur 10 éprouvettes. Elle est exprimée en mm. Un fil présentant une raideur supérieure ou égale à 120 convient pour un usage requérant une intégrité élevée du fil.
- l'aptitude à l'imprégnation par une résine est évaluée visuellement sur une échelle allant de 0 (mauvais; absence de mouillage) à 5 (excellent; fil invisible dans la résine).
- la résistance en traction est mesurée dans les conditions définies par la norme ISO 3341. Elle est exprimée en g/tex.

### EXEMPLE 1

Des filaments de 16 µm de diamètre obtenus par étirage de filets de verre E fondu s'écoulant d'une filière (800 orifices) sont revêtus d'une première composition A puis d'une deuxième composition B (en pourcentage pondéral) :

### Composition A

| | |
|---|---|
| • triméthylolpropane triglycidyl éther⁽¹⁾ | 22 |
| • butanediol diglycidyl éther⁽²⁾ | 10 |
| • bisphénol F diglycidyl éther⁽³⁾ | 7 |
| • gamma-méthacryloxypropyl triméthoxysilane⁽⁴⁾ | 12 |
| • gamma-glycidoxypropyl triméthoxysilane⁽⁵⁾ | 8 |

### Composition B

| | |
|---|---|
| • isostéarate de PEG 300⁽⁶⁾ | 18 |
| • 1-(2-aminoéthyl)pipérazine | 15 |
| • 2-amino-2-méthyl-1-propanol | 8 |

La composition d'ensimage présente un rapport r égal à 0,615, un rapport r' égal à 4,5 et un temps de gel de 51,5 minutes.

Les filaments sont rassemblés en fils qui sont bobinés pour former des gâteaux (4 fils de 50 tex). A partir des fils extraits de 6 de ces gâteaux, on forme un fil de 1200 tex qui présente une perte au feu de 1,2 %.

Ce fil présente une intégrité moyenne, une bonne aptitude à la coupe par projection simultanée en présence de résine et un faible niveau d'électricité statique. Son aptitude à être imprégné par une résine polyester est évaluée à 1,5. Le fil peut être utilisé en tant que renfort dans les matériaux du type SMC (« Sheet Molding Compound »).

### EXEMPLE 2

On procède dans les conditions de l'exemple 1, en utilisant les compositions A et B suivantes :

### Composition A

| | |
|---|---|
| • triméthylolpropane triglycidyl étier⁽¹⁾ 18 | |
| • butanediol diglycidyl éther⁽²⁾ | 12 |
| • bisphénol F diglycidyl éther⁽³⁾ | 4 |
| • crésylglycidyl éther⁽⁷⁾ | 7 |
| • gamma-méthacryloxypropyl triméthoxysilane⁽⁴⁾ | 10 |
| • gamma-glycidoxypropyl triméthoxysilane⁽⁵⁾ | 10 |

### Composition B

| | |
|---|---|
| • 1-(2-aminoéthyl)pipérazine | 10 |
| • 2-amino-2-méthyl-1-propanol | 7 |
| • poly(oxyde de propylène) de masse moléculaire 230⁽⁸⁾ | 7 |
| • mélange de triméthyl-1,6-hexane diamine, de m-xylylène diamine et de 4-ter-butylphénol⁽⁹⁾ | 7 |
| • bisphénol A polyéther⁽¹⁰⁾ | 4 |
| • mélange d'huiles minérales et de tensioactif⁽¹¹⁾ | 4 |

La composition d'ensimage présente un rapport r égal à 0,592, un rapport r' égal à 6,32 et un temps de gel de 106 minutes.

A partir des fils (4 x 50 tex) extraits de 6 gâteaux, on forme un fil de 1200 tex qui présente une perte au feu de 1,3 %.

Ce fil possède les mêmes propriétés que celui de l'exemple 1. En outre, lorsqu'il est utilisé dans un pistolet de coupe avec projection simultanée de résine polyester, il ne donne lieu à aucune bûchette, ni aucun recollement des fils coupés.

### EXEMPLE 3

On procède dans les conditions de l'exemple 1, en utilisant les compositions A et B suivantes :

### Composition A

| | |
|---|---|
| • triméthylolpropane triglycidyl étier⁽¹⁾ | 23 |
| • butanediol diglycidyl éther⁽²⁾ | 11 |
| • bisphénol F diglycidyl éther⁽³⁾ | 7 |
| • gamma-méthacryloxypropyl triméthoxysilane⁽⁴⁾ | 13 |
| • gamma-glycidoxypropyl triméthoxysilane⁽⁵⁾ | 8 |

### Composition B

| | |
|---|---|
| • isostéarate de PEG 300⁽⁶⁾ | 19 |
| • 1-(2-aminoéthyl)pipérazine | 16 |
| • 1,8-diazabicyclo[5,4,0]undéc-7-ène | 3 |

La composition d'ensimage présente un rapport r égal à 1,04, un rapport r' égal à 12,79 et un temps de gel de 90 minutes.

A partir des fils (4 x 50 tex) extraits de 6 gâteaux, on forme un fil de 1200 tex qui présente une perte au feu de 1,3 %.

Ce fil possède une bonne intégrité, peut être coupé facilement et présente un niveau d'électricité statique acceptable. Son aptitude à être imprégné par une résine polyester est évaluée à 2,5. En outre, lorsqu'il est utilisé dans un pistolet de coupe avec projection simultanée de résine polyester, il ne donne lieu à aucune bûchette et seuls quelques recollements de fils coupés sont observés.

Le fil peut être utilisé en tant que renfort dans les matériaux du type SMC (« Sheet Molding Compound »).

### EXEMPLE 4

On procède dans les conditions de l'exemple 1, en utilisant les compositions A et B suivantes :

### Composition A

| | |
|---|---|
| • triméthylolpropane triglycidyl éther⁽¹⁾ | 22 |
| • butanediol diglycidyl éther⁽²⁾ | 9 |
| • crésylglycidyl éther⁽⁷⁾ | 10 |
| • gamma-méthacryloxypropyl triméthoxysilane⁽⁴⁾ | 8 |
| • gamma-glycidoxypropyl triméthoxysilane⁽⁵⁾ | 8 |

### Composition B

| | |
|---|---|
| • isostéarate de PEG 300⁽⁶⁾ | 12 |
| • 1-(2-aminoéthyl)pipérazine | 8 |
| • triéthanolamine | 8 |
| • mélange de triméthyl-1,6-hexane diamine, de m-xylylène diamine et de 4-ter-butylphénol⁽⁹⁾ | 8 |
| • 1,8-diazabicyclo[5,4,0]undéc-7-ène | 7 |

La composition d'ensimage présente un rapport r égal à 0,854, un rapport r' égal à 1,67 et un temps de gel de 18,6 minutes.

Les filaments sont rassemblés en fils de 292 tex qui sont bobinés en gâteaux. A partir des fils extraits de 2 de ces gâteaux, on forme un fil de 665 tex qui présente une perte au feu de 0,35 %. Le fil présente une résistance en traction de 43 g/tex, une raideur de 210 mm et une teneur en composés volatils de 0,06 %.

Ce fil est soumis à un traitement destiné à lui conférer du volume dans les conditions suivantes : diamètre des buses d'entrée et de sortie égal à 0,8 et 2 mm respectivement, pression d'air : 6-6,5 bars, pression de bobinage : 1,5 bar, vitesse de bobinage : 200 m/minute, taux de suralimentation des godets d'étirage : 25 %.

On obtient une mèche légèrement irrégulière d'environ 1 cm de largeur moyenne, sans la présence de bourre.

### EXEMPLE 5

On procède dans les conditions de l'exemple 4, en utilisant les compositions A et B suivantes :

### Composition A

| | |
|---|---|
| • triméthylolpropane triglycidyl éther⁽¹⁾ | 10 |
| • butanediol diglycidyl éther⁽²⁾ | 18 |
| • bisphénol F diglycidyl éther⁽³⁾ | 7 |
| • gamma-méthacryloxypropyl triméthoxysilane⁽⁴⁾ | 12 |
| • gamma-glycidoxypropyl triméthoxysilane⁽⁵⁾ | 7 |

### Composition B

| | |
|---|---|
| • 1-(2-aminoéthyl)pipérazine | 8 |
| • 1,5-pentanediol | 15 |
| • mélange de triméthyl-1,6-hexane diamine, de m-xylylène diamine et de 4-ter-butylphénol⁽⁹⁾ | 7 |
| • bisphénol A polyéther⁽¹⁰⁾ | 6 |
| • mélange d'huiles minérales et de tensioactif⁽¹¹⁾ | 10 |

La composition d'ensimage présente un rapport r égal à 0,601, un rapport r' égal à 0,97 et un temps de gel de 42 minutes.

Les filaments sont rassemblés en fils de 314 tex qui sont bobinés en gâteaux. A partir des fils extraits de 2 de ces gâteaux, on forme un fil de 660 tex qui présente une perte au feu de 0,28 %. Le fil présente une résistance en traction de 30,7 g/tex, une raideur de 150 mm.

Ce fil est soumis à un traitement destiné à lui conférer du volume dans les conditions suivantes : diamètre des buses d'entrée et de sortie égal à 0,8 et 1,8 mm respectivement, pression d'air : 6 bars, pression de bobinage : 1,5 bar, vitesse de bobinage : 200 m/minute, taux de suralimentation des godets d'étirage : 20 %.

On obtient une mèche irrégulière de largeur égale à environ 1 cm, sans formation de bourre.

### EXEMPLE 6

On procède dans les conditions de l'exemple 4, en utilisant les compositions A et B suivantes :

### Composition A

| | |
|---|---|
| • triméthylolpropane triglycidyl éther⁽¹⁾ | 19 |
| • butanediol diglycidyl éther⁽²⁾ | 12 |
| • bisphénol F diglycidyl éther⁽³⁾ | 7 |
| • gamma-méthacryloxypropyl triméthoxysilane⁽⁴⁾ | 12 |
| • gamma-glycidoxypropyl triméthoxysilane⁽⁵⁾ | 8 |

### Composition B

| | |
|---|---|
| • 1-(2-aminoéthyl)pipérazine | 15 |
| • 1,5-pentanediol | 15 |
| • bisphénol A polyéther⁽¹⁰⁾ | 6 |
| • mélange d'huiles minérales et de tensio-actif⁽¹¹⁾ | 6 |

La composition d'ensimage présente un rapport r égal à 0,589, un rapport r' égal à 1,14 et un temps de gel de 20 minutes.

Les filaments sont rassemblés en fils de 305 tex qui sont bobinés en gâteaux. A partir des fils extraits de 2 de ces gâteaux, on forme un fil de 640 tex qui présente une perte au feu de 0,30 %. Le fil présente une résistance en traction de 37 g/tex, une raideur de 170 mm.

Ce fil est soumis à un traitement destiné à lui conférer du volume dans les conditions suivantes : diamètre des buses d'entrée et de sortie égal à 0,9 et 2 mm respectivement, pression d'air : 6,5 bars, pression de bobinage : 1,5 bar, vitesse de bobinage : 200 m/minute, suralimentation des godets d'étirage : 26,6 %.

On obtient une mèche régulière faiblement voluminisée.

On observe dans les exemples précédents qu'il est possible de faire varier le temps de gel des fils de verre revêtus de l'ensimage selon l'invention dans une large gamme de valeurs. Ainsi, avec un même système de base, en adaptant la teneur en composants amine et en composants hydroxy, on peut notamment obtenir un temps de gel comparable avec catalyseur (exemples 3 et 4) ou sans catalyseur (exemples 2 et 6).

Egalement, le temps de gel peut être modulé par le choix du ou des composants hydroxy. Ainsi, on constate que l'usage d'un diol à chaîne hydrocarbonée courte permet de réduire le temps de gel d'un facteur environ 4,5 (exemples 3 et 6).
(1) Commercialisé sous la référence « Araldite DY 0396 » par la Société VANTICO
(2) Commercialisé sous la référence « Araldite DY 0397 » par la Société VANTICO
(3) Commercialisé sous la référence « Araldite GY 285 » par la Société VANTICO
(4) Commercialisé sous la référence « Silquest A 174 » par la Société CROMPTON
(5) Commercialisé sous la référence « Silquest A 187 » par la Société CROMPTON
(6) Commercialisé sous la référence « LDM 1018 » par la Société SEPPIC
(7) Commercialisé sous la référence « Heloxy 62 » par la Société SHELL
(8) Commercialisé sous la référence « Jeffamine D 230 » par la Société HUNTSMAN
(9) Commercialisé sous la référence « Ancamine 2089 M » par la Société AIR PRODUCTS
(10) Commercialisé sous la référence « Simulsol BPPE » par la Société SEPPIC
(11) Commercialisé sous la référence « Torfil LA 4 » par la Société LAMBERTI

## Revendications

1. Composition d'ensimage, notamment pour fils de verre, constituée d'une solution comprenant moins de 5 % en poids de solvant et comprenant un système de base polymérisable thermiquement, ledit système comprenant au moins 60 % en poids de composants de masse moléculaire inférieure à 750 et au moins 60 % en poids de composants d'un mélange :
ο de composant(s) présentant au moins une fonction réactive époxy
ο de composant(s) présentant au moins une fonction réactive amine, de préférence primaire ou secondaire,
ο et de composant(s) présentant au moins une fonction réactive hydroxy,
**caractérisée en ce que**
la teneur en composant(s) hydroxy est comprise entre 10 et 30 % en poids de la composition d'ensimage.

2. Fil de verre revêtu d'une composition d'ensimage selon la revendication 1

3. Fil de verre selon la revendication 2, **caractérisé en ce que** le système de base polymérisable représente entre 75 et 100 % en poids de la composition.

4. Fil de verre selon l'une des revendications 2 ou 3, **caractérisé en ce que** le système de base est constitué à 80 % et jusqu'à 100 % en poids de(s) composant(s) époxy, de(s) composant(s) amine et de(s) composant(s) hydroxy.

5. Fil de verre selon l'une des revendications 2 à 4, **caractérisé en ce que** le système de base comprend au moins 70 % en poids en poids de composant(s) de masse moléculaire inférieure à 750.

6. Fil de verre selon l'une des revendications 2 à 5, **caractérisé en ce que** le rapport du nombre de sites réactifs époxy à la somme du nombre de sites réactifs amine et du nombre de sites hydroxy est compris entre 0,2 et 2,5.

7. Fil de verre selon l'une des revendications 2 à 6, **caractérisé en ce que** le rapport du nombre de sites réactifs amine au nombre de sites réactifs hydroxy est compris entre 0,5 et 20.

8. Fil de verre selon l'une des revendications 2 à 7, **caractérisé en ce que** la teneur en composant(s) époxy est comprise entre 15 et 85 % en poids de la composition d'ensimage.

9. Fil de verre selon l'une des revendications 2 à 8, **caractérisé en ce que** la teneur en composant(s) amine est supérieure ou égale à 5 % en poids de la composition d'ensimage.

10. Fil de verre selon l'une des revendications 2 à 9, **caractérisé en ce que** la composition comprend en outre un catalyseur dans une proportion inférieure à 8 % en poids.

11. Fil de verre selon l'une des revendications 2 à 10, **caractérisé en ce que** la composition comprend en outre un agent de couplage dans des proportions comprises entre 0 et 30 % en poids.

12. Fil de verre selon l'une des revendications 2 à 11, **caractérisé en ce que** la composition comprend en outre un agent de mise en oeuvre textile dans des proportions comprises entre 0 et 30 % en poids.

13. Fil de verre selon l'une des revendications 2 à 12, **caractérisé en ce que** la composition comprend en outre un agent filmogène dans une proportion inférieure ou égale à 8 % en poids.

14. Fil de verre selon l'une des revendications 2 à 13, **caractérisé en ce que** la composition comprend au moins un inhibiteur de la corrosion tel que l'acide gallique ou ses dérivés.

15. Fil de verre selon l'une des revendications 2 à 14, **caractérisé en ce que** le système de base est constitué de composant(s) époxy, de composant(s) amine renfermant deux fonctions réactives amines et de composant(s) renfermant au moins une fonction réactive hydroxy.

16. Fil de verre selon la revendication 14, **caractérisé en ce que** les fonctions réactives amine sont primaires et/ou secondaires.

17. Composite comprenant au moins une matière organique et/ou inorganique et des fils de verre ensimés, **caractérisé en ce que** tout ou partie des fils de verre est constitué de fils de verre ensimés selon l'une des revendications 1 à 15.

## Claims

1. A sizing composition, in particular for glass strands, composed of a solution comprising at least 5% by weight of solvent and comprising a thermally curable base system, said system comprising at least 60% by weight of components with a molecular mass of less than 750 and at least 60% by weight of components of a mixture:
• of component(s) exhibiting at least one epoxy reactive functional group,
• of component(s) exhibiting at least one amine, preferably primary or secondary amine, reactive functional group,
• and of component(s) exhibiting at least one hydroxyl reactive functional group,
**characterized in that** the content of hydroxyl component(s) is between 10 and 30% by weight of the sizing composition.

2. A glass strand coated with a sizing composition according to claim 1.

3. The glass strand as claimed in claim 2, **characterized in that** the curable base system represents between 75 and 100% by weight of the composition.

4. The glass strand as claimed in either of claims 2 and 3, **characterized in that** the base system is composed to 80% and up to 100% by weight of epoxy component(s), of amine component(s) and of hydroxyl component(s).

5. The glass strand as claimed in one of claims 2 to 4, **characterized in that** the base system comprises at least 70% by weight by weight of component(s) with a molecular mass of less than 750.

6. The glass strand as claimed in one of claims 2 to 5, **characterized in that** the ratio r of the number of epoxy reactive sites to the sum of the number of amine reactive sites and of the number of hydroxyl sites is between 0.2 and 2.5.

7. The glass strand as claimed in one of claims 2 to 6, **characterized in that** the ratio r' of the number of amine reactive sites to the number of hydroxyl reactive sites is between 0.5 and 20.

8. The glass strand as claimed in one of claims 2 to 7, **characterized in that** the content of epoxy component(s) is between 15 and 85% by weight of the sizing composition.

9. The glass strand as claimed in one of claims 2 to 8, **characterized in that** the content of amine component(s) is greater than or equal to 5% by weight of the sizing composition.

10. The glass strand as claimed in one of claims 2 to 9, **characterized in that** the composition additionally comprises a catalyst in a proportion of less than 8% by weight.

11. The glass strand as claimed in one of claims 2 to 10, **characterized in that** the composition additionally comprises a coupling agent in proportions of between 0 and 30% by weight.

12. The glass strand as claimed in one of claims 2 to 11, **characterized in that** the composition additionally comprises a textile processing agent in proportions of between 0 and 30% by weight.

13. The glass strand as claimed in one of claims 2 to 12, **characterized in that** the composition additionally comprises a film-forming agent in a proportion of less than or equal to 8% by weight.

14. The glass strand as claimed in one of claims 2 to 13, **characterized in that** the composition comprises at least one corrosion inhibitor, such as gallic acid or its derivatives.

15. The glass strand as claimed in one of claims 2 to 14, **characterized in that** the base system is composed of epoxy component(s), of amine component(s) including two amine reactive functional groups and of component(s) including at least one hydroxyl reactive functional group.

16. The glass strand as claimed in claim 14, **characterized in that** the amine reactive functional groups are primary and/or secondary amine reactive functional groups.

17. A composite comprising at least one organic and/or inorganic material and sized glass strands, **characterized in that** all or a portion of the glass strands are composed of sized glass strands as claimed in one of claims 1 to 15.

## Patentansprüche

1. Schlichtezusammensetzung, insbesondere für Glasfäden, bestehend aus einer Lösung mit weniger als 5 Gew.-% Lösungsmittel und umfassend ein thermisch polymerisierbares Basissystem, wobei das System wenigstens 60 Gew.-% Komponenten mit einer molaren Masse von weniger als 750 sowie wenigstens 60 Gew.-% Komponenten eines Gemischs aus:
- Komponente(n), die wenigstens eine reaktive Epoxidfunktion aufweist / aufweisen
- Komponente(n), die wenigstens eine reaktive, vorzugsweise primäre oder sekundäre, Aminfunktion aufweist / aufweisen,
- und Komponente(n), die wenigstens eine reaktive Hydroxyfunktion aufweist / aufweisen,
umfasst, **dadurch gekennzeichnet, dass** der Gehalt an Hydroxykomponente(n) zwischen 10 und 30 Gew.-% der Schlichtezusammensetzung liegt.

2. Glasfaden, der mit einer Schlichtezusammensetzung nach Anspruch 1 überzogen ist.

3. Glasfaden nach Anspruch 2, **dadurch gekennzeichnet, dass** das polymerisierbare Basissystem zwischen 75 und 100 Gew.-% der Zusammensetzung ausmacht.

4. Glasfaden nach einem der Ansprüche 2 oder 3, **dadurch gekennzeichnet, dass** das Basissystem zu 80 Gew.-% und bis zu 100 Gew.-% aus Epoxidkomponente(n), Aminkomponente(n) und Hydroxykomponente(n) besteht.

5. Glasfaden nach einem der Ansprüche 2 bis 4, **dadurch gekennzeichnet, dass** das Basissystem wenigstens 70 Gew.-% Komponente(n) mit einer molaren Masse von weniger als 750 umfasst.

6. Glasfaden nach einem der Ansprüche 2 bis 5, **dadurch gekennzeichnet, dass** das Verhältnis r der Anzahl von reaktiven Epoxidstellen zur Summe aus der Anzahl von reaktiven Aminstellen und aus der Anzahl von Hyroxy-Stellen zwischen 0,2 und 2,5 beträgt.

7. Glasfaden nach einem der Ansprüche 2 bis 6, **dadurch gekennzeichnet, dass** das Verhältnis r der Anzahl von reaktiven Aminstellen zur Anzahl von reaktiven Hydroxy-Stellen zwischen 0,5 und 20 beträgt.

8. Glasfaden nach einem der Ansprüche 2 bis 7, **dadurch gekennzeichnet, dass** der Gehalt an Epoxidkomponente(n) zwischen 15 und 85 Gew.-% der Schlichtezusammensetzung beträgt.

9. Glasfaden nach einem der Ansprüche 2 bis 8, **dadurch gekennzeichnet, dass** der Gehalt an Aminkomponente(n) mehr als oder gleich 5 Gew.-% der Schlichtezusammensetzung beträgt.

10. Glasfaden nach einem der Ansprüche 2 bis 9, **dadurch gekennzeichnet, dass** die Zusammensetzung ferner einen Katalysator in einem Anteil von weniger als 8 Gew.-% umfasst.

11. Glasfaden nach einem der Ansprüche 2 bis 10, **dadurch gekennzeichnet, dass** die Zusammensetzung ferner ein Kopplungsmittel in Anteilen zwischen 0 und 30 Gew.-% umfasst.

12. Glasfaden nach einem der Ansprüche 2 bis 11, **dadurch gekennzeichnet, dass** die Zusammensetzung ferner ein Textilhilfsmittel in Anteilen zwischen 0 und 30 Gew.-% umfasst.

13. Glasfaden nach einem der Ansprüche 2 bis 12, **dadurch gekennzeichnet, dass** die Zusammensetzung ferner ein filmbildendes Mittel in einem Anteil von weniger als oder gleich 8 Gew.-% umfasst.

14. Glasfaden nach einem der Ansprüche 2 bis 13, **dadurch gekennzeichnet, dass** die Zusammensetzung wenigstens einen Korrosionsinhibitor, wie Gallussäure oder deren Derivate umfasst.

15. Glasfaden nach einem der Ansprüche 2 bis 14, **dadurch gekennzeichnet, dass** das Basissystem von Epoxidkomponente(n), Aminkomponente(n), die zwei reaktive Aminfunktionen einschließt / einschließen, und von Komponente(n), die wenigstens eine reaktive Hyroxyfunktion einschließt / einschließen, gebildet ist.

16. Glasfaden nach Anspruch 14, **dadurch gekennzeichnet, dass** die reaktiven Aminfunktionen primär und/oder sekundär sind.

17. Verbundwerkstoff, der wenigstens ein organisches und/oder anorganisches Material sowie geschlichtete Glasfäden umfasst, **dadurch gekennzeichnet, dass** alle Glasfäden oder ein Teil dieser von geschlichteten Glasfäden nach einem der Ansprüche 1 bis 15 gebildet sind / ist.
